# EUROPÄISCHE PATENTSCHRIFT

(11) **EP 3 389 355 B1**
(45) Veröffentlichungstag und Bekanntmachung des Hinweises auf die Patenterteilung: **14.07.2021**
(21) Anmeldenummer: 16805336.1
(22) Anmeldetag: 22.11.2016
(51) Int. Cl.: A01D 34/00

(54) **SYSTEM UND VERFAHREN ZUR BEARBEITUNG EINES BODENS MIT EINER MOBILEN ROBOTEREINHEIT**
SYSTEM AND METHOD FOR PROCESSING A GROUND WITH A MOBILE ROBOT UNIT
SYSTÈME ET PROCÉDÉ DE TRAITEMENT D'UN SOL AU MOYEN D'UNE UNITÉ DE ROBOT MOBILE

(30) Priorität: 16.12.2015 DE 102015121972
(43) Veröffentlichungstag der Anmeldung: 24.10.2018
(73) Patentinhaber: Vorwerk & Co. Interholding GmbH, 42275 Wuppertal (DE)
(72) Erfinder: STRANG, Benjamin, 42651 Solingen (DE)
(74) Vertreter: Cohausz & Florack
(86) Internationale Anmeldenummer: PCT/EP2016/078407
(87) Internationale Veröffentlichungsnummer: WO 2017/102260

(56) Entgegenhaltungen:
- EP-A2- 2 330 471
- WO-A1-2007/140930
- DE-A1- 3 816 622
- DE-A1-102010 006 531
- JP-A- H0 346 009
- US-A1- 2012 265 391

## Beschreibung

Die Erfindung betrifft ein System zur Bearbeitung eines Bodens zumindest teilweise in einem Außenbereich, insbesondere Entfernen von Verschmutzungen oder Rasenmähen, mit einer Basisstation und mit einer mobilen Robotereinheit, insbesondere Saugroboter, Kehrroboter oder Rasenmähroboter, wobei mindestens ein Erfassungsmittel zum Erfassen von mindestens einer Umweltgröße vorgesehen ist und wobei eine Steuerung vorgesehen ist, die die Funktionsweise der mobilen Robotereinheit in Abhängigkeit von dem Wert mindestens einer von dem mindestens einen Erfassungsmittel erfassten Umweltgröße beeinflusst. Die Erfindung betrifft auch zwei Verfahren zum Steuern einer mobilen Robotereinheit zur Bearbeitung eines Bodens zumindest teilweise in einem Außenbereich.

Als selbstständig fahrende und navigierende Robotereinheiten sind insbesondere Reinigungsroboter in Form von Saugrobotern und Kehrrobotern bekannt. Saugroboter sind in der Lage, selbstständig Hartböden, wie geflieste Böden oder Steinböden, von Staub und Grobgut zu reinigen. Entsprechend können Saugroboter auch eingesetzt werden, um Balkone, Terrassen und Wegflächen von Staub, Blättern oder sonstigem Schmutz zu reinigen, vorausgesetzt eine entsprechende Begrenzung der zu reinigenden Balkonfläche oder ähnliche Fläche ist gegeben. Kehrroboter reinigen den Boden rein mechanisch mittels Bürsten und Auffangbehältern, ohne dass ein Saugluftstrom eingesetzt wird.

Der dauernde Einsatz eines Saugroboters auf Außenflächen wie Balkon, Terrasse und Wegflächen ist aber nur bedingt möglich, da bekannte Staubsaugermodelle im Gegensatz zu Rasenmährobotern nicht regenfest sind. Weiterhin würden Sonneneinstrahlung, Wärme und Kälte den Saugroboter im Vergleich zum sachgemäßen Einsatz innerhalb einer Wohnung oder im Haus stark belasten.

Weiterhin muss für einen Einsatz eines Saugroboters in Außenbereichen sichergestellt werden, dass die zu reinigende Außenfläche trocken ist, kein Wasser in Pfützen vorhanden ist und dass somit der Saugroboter sich nicht selbst durch Einsaugen von Wasser schädigt. Ebenso ist ein gutes Reinigungsergebnis durch eine gute Staubaufnahme in der Regel nur bei trockenen Oberflächen und trockenem Sauggut gegeben.

Eine typische Basisstation für einen Saugroboter verfügt über einen Netzanschluss und Ladekontakte, über die ein Saugroboter in angedockter Position geladen werden kann. Über die einfache Ladefunktionalität hinaus gehend sind aus dem Stand der Technik Zusatzfunktionen einer Basisstation wie zum Beispiel das Entleeren des Staubfaches des Saugroboters bekannt.

Als selbstständig fahrende und navigierende Robotereinheiten sind auch Rasenmähroboter bekannt, deren Einsatz auch in feuchten oder nassen Umgebungen möglich ist. Beim Einsatz von Rasenmährobotern können jedoch bisher nicht automatisch mittelfristige oder langfristige Wetterbedingungen berücksichtigt werden, da bei längerfristig nassem oder feuchtem Wetter ein Rasen häufiger gemäht werden sollte und bei längerfristig trockenem Wetter die Häufigkeit des Mähens reduziert sein sollte.

Für Rasenmähroboter sind Basisstationen mit Aufladefunktion, aber auch Roboter-Garagen bekannt. Die Garagen sollen die Rasenmähroboter vor Sonne und Regen schützen, sowie einen Diebstahlschutz realisieren. Eine solche Garage besteht im Wesentlichen aus einem Rückteil mit der Aufladestation und elektrischen Kontakten und aus einem Dach, das bei Bedarf nach oben geklappt werden kann.

Andere Garagen für Rasenmähroboter weisen ein automatisches Garagentor auf, das beispielsweise zeitgesteuert in Abstimmung mit dem Programm des Rasenmähroboters geöffnet und geschlossen wird.

Daher liegt der vorliegenden Erfindung das technische Problem zugrunde, eine Verbesserung des Arbeitsergebnisses einer mobilen Robotereinheit bei gleichzeitig verbesserter Betriebssicherheit zu erreichen.

Aus der WO 2007/140930 A1 ist ein System mit einer Ladestation und einem autonom arbeitenden Rasenmäher bekannt, wobei der Rasenmäher einen Regensensor aufweist und wobei der Rasenmäher bei Regen in die Ladestation zurückkehrt.

Aus der US 2012/265391 A1 ist eine Robotereinheit zum Rasenmähen mit einer Basisstation bekannt, wobei eine Steuereinheit die Robotereinheit beeinflusst.

Daher liegt der vorliegenden Erfindung das technische Problem zugrunde, eine Verbesserung des Arbeitsergebnisses einer mobilen Robotereinheit bei gleichzeitig verbesserter Betriebssicherheit zu erreichen.

Das zuvor aufgeführte technische Problem wird erfindungsgemäß durch ein System zur Bearbeitung eines Bodens zumindest teilweise in einem Außenbereich, insbesondere Entfernen von Verschmutzungen oder Rasenmähen, gelöst mit einer Basisstation und mit einer mobilen Robotereinheit, die insbesondere mit einem Saugroboter, einem Kehrroboter oder einem Rasenmähroboter, wobei mindestens ein Erfassungsmittel zum Erfassen von mindestens einer Umweltgröße vorgesehen ist und wobei eine Steuerung vorgesehen ist, die die Funktionsweise der mobilen Robotereinheit in Abhängigkeit von dem Wert mindestens einer von dem mindestens einen Erfassungsmittel erfassten Umweltgröße beeinflusst, dadurch gekennzeichnet, dass die Erfassungsmittel als Teil einer Hauswetterstation ausgebildet sind.

Durch das Erfassen von mindestens einer Umweltgröße kann insbesondere das Wettergeschehen in dem Bereich erfasst werden, in dem die Robotereinheit eingesetzt werden soll. Das mindestens eine Erfassungsmittel erzeugt auf der Basis der Messung der mindestens einen Umweltgröße ein Signal, dass an die Steuerung übertragen wird. In der Steuerung wird das Signal eines Erfassungsmittels bzw. werden die Signale von mehreren Erfassungsmitteln ausgewertet und gegebenenfalls wird ein Steuerungssignal zur Beeinflussung der Funktionsweise der mobilen Robotereinheit erzeugt.

Die Erfassungsmittel sind als Teil einer Hauswetterstation ausgebildet. Dabei wird die mindestens eine Umweltgröße über eine Datenverbindung auf die Steuerung übertragen. Die Hauswetterstation kann dabei eine direkte Verbindung mit der Steuerung aufweisen oder Teil eines Hausnetzwerks mit weiteren Geräten sein. Somit kann eine Wetterstation nicht nur den Einsatz der mobilen Robotereinheit, sondern auch noch andere wetterabhängige Einstellungen von Rollos, Vorhängen oder Klimaanlagen mit Umweltgrößen versorgen.

Als mögliche Umweltgrößen kommen dabei zur Anwendung: Temperatur, Niederschlag, Niederschlagsmenge, Luftfeuchtigkeit, Bodenfeuchtigkeit, Windstärke, Luftdruck, wobei auch zeitliche Abfolgen der Umweltgrößen in der Vergangenheit und möglicherweise auch in der Zukunft abgespeichert und berücksichtigt werden können. Somit erlangt das erfindungsgemäße System Informationen insbesondere über das aktuelle Wetter, so dass ein Einsatz der Robotereinheit bei möglicherweise schlechten Wetterbedingungen eingeschränkt oder verhindert werden kann. Das beschriebene System kann also zu einem Teil auch als Wetterstation dienen oder einen Teil einer Wetterstation darstellen.

In bevorzugter Weise sind die Erfassungsmittel als Sensor für die mindestens eine Umweltgröße ausgebildet. So können die Erfassungsmittel als Temperatursensor, Niederschlagssensor, Niederschlagsmengensensor, Luftfeuchtigkeitssensor, Bodenfeuchtigkeitssensor, Windstärkesensor oder als Luftdrucksensor ausgebildet sein. Des Weiteren weisen die Erfassungsmittel jeweils eine Kommunikationsschnittstelle zur Übertragung der Messesignale an die Steuerung auf. Die Kommunikationsschnittstelle kann mittels Kabel oder Funk ausgebildet sein. Dabei ist es zusätzlich möglich, dass entweder die Erfassungsmittel oder die Steuerung die mindestens eine Umweltgröße aufzeichnen, so dass auch eine zeitliche Entwicklung der mindestens einen Umweltgröße beobachtet und ausgewertet werden kann.

Alternativ oder zusätzlich können die Erfassungsmittel eine Kommunikationsschnittstelle aufweisen und die Erfassungsmittel sind dann geeignet, Wetterdaten als die mindestens eine Umweltgröße herunterzuladen. Als Kommunikationsschnittstelle kommen drahtgebundene oder drahtlose Verbindungen wie beispielsweise LAN, WLAN oder eine mobile Datenverbindung in Frage. Die Wetterdaten können dabei Wetterdaten der vergangenen Stunden oder Tage, aktuelle Wetterdaten oder Wetterprognosen über die nächsten Stunden oder Tage beinhalten. Somit können je nach Anwendung das vergangene und/oder zukünftige Wettergeschehen und die aktuelle Wettersituation für das Beeinflussen der Funktionsweise der mobilen Robotereinheit verwendet werden.

Über die Kommunikationsschnittstelle können die Erfassungsmittel mit dem Internet verbunden sein, so dass Wetterdaten aus dem Internet abgerufen werden können. Die Erfassungsmittel können auch über die Kommunikationsschnittstelle mit einem Hausnetzwerk oder mit einem einzelnen Hausgerät wie beispielweise eine Hauswetterstation verbunden sein. Somit können über die Kommunikationsschnittstelle nicht nur Wetterdaten übertragen werden, sondern auch bidirektional Betriebsdaten und Einsatzplanungsdaten bezüglich der mobilen Robotereinheit übertragen werden. Diese Daten können dann wiederum auch von weiteren an das Hausnetzwerk angebundenen Geräten verarbeitet, weitergenutzt, ergänzt oder in eine übergeordnete Planung einbezogen werden.

Ebenso wie der Ort der Erfassungsmittel beliebig gewählt werden kann, ist es auch möglich, dass die Steuerung an der Basisstation, an der Robotereinheit, an dem zumindest einen Erfassungsmittel oder im Umfeld der Basisstation angeordnet ist. Letztlich kommt es nur darauf an, dass die Messsignale der Erfassungsmittel von der Steuerung erfasst und ausgewertet werden, um festzustellen, ob die Funktionsweise der mobilen Robotereinheit beeinflusst werden soll oder nicht. Gegebenenfalls wird dann ein entsprechendes Steuersignal erzeugt.

Des Weiteren kann ein Teil eines Hausnetzwerks die Steuerung darstellen, so dass de Steuerung nicht einen eigenständigen Teil darstellt. Somit kann auf eine separate Steuerung verzichtet werden und ein gegebenenfalls vorhandenes Hausnetzwerk zur Steuerung einer Mehrzahl von Komponenten des Hauses kann auch die Aufgabe der Steuerung übernehmen.

Die Sensorik der Erfassungsmittel und die Basisstation können zudem jeweils per LAN, WLAN oder Internetdirektanbindung ihre Daten zur Weiterverarbeitung in das Hausnetzwerk oder einen mit diesem Netzwerk in Verbindung stehenden Internetserver einbringen.

In bevorzugter Weise ist die Steuerung dafür eingerichtet, ein Blockademittel, insbesondere eine Ausfahrtssperre eines an der Basisstation ausgebildeten überdachten Bereichs zu steuern. In diesem Fall befindet sich die Robotereinheit an der Basisstation, um mit elektrischer Energie geladen zu werden oder auch nur um auf einen nächsten Bearbeitungszyklus zu warten. Ein nächster Bearbeitungszyklus kann beispielsweise durch eine entsprechende Programmierung einer Zeitsteuerung vorgegeben sein. Zur Aktivierung des Blockademittels kann dann beispielsweise ein Signal an die Robotereinheit gesendet werden, um ein Ausfahren zu verhindern, auch wenn die Zeitsteuerung eigentlich einen nächsten Bearbeitungszyklus starten würde. Als Blockademittel kann auch eine Ausfahrtssperre aktiviert werden, wobei eine Ausfahrtssperre als Garagentor einer Garage oder als Balken ausgebildet sein kann und wobei ein Ausfahren der Robotereinheit verhindert wird, indem das Garagentor oder der Balken in einer geschlossenen Position gehalten wird. Unter einer Garage ist ein überdachter Bereich als Wetterschutz zu verstehen, der neben einem Dach allseitig oder teilweise umfangseitig geschlossen oder nur eine Rückwand aufweisen kann.

Des Weiteren kann die Steuerung dafür eingerichtet sein, ein Beendigungssignal zu erzeugen und mittels Kommunikationsmitteln an die Robotereinheit zu übertragen, wobei die Robotereinheit eine Bewegungssteuerung aufweist, die eingerichtet ist, nach Empfang des Beendigungssignals die Bearbeitung des Bodens zu beenden und ggf. in die Basisstation zurückzufahren. Somit kann die Robotereinheit auch während der Bearbeitung daran gehindert werden, bei ungünstigen Umweltbedingungen, beispielsweis einem nahenden Regenereignis, die Bearbeitung fortzusetzen. Somit kann die Robotereinheit vor einer Beschädigung durch Nässe oder vor erschwerten Bearbeitungsbedingungen geschützt werden.

Darüber hinaus kann die Bewegungssteuerung der Robotereinheit eine abgespeicherte Karte aufweisen, wobei die Karte eine virtuelle Grenze zwischen dem überdachten Raumbereich und dem nicht überwachten Bereich aufweist und wobei die Bewegungssteuerung in Abhängigkeit von dem Wert der mindestens einen von dem mindestens einen Erfassungsmittel erfassten Umweltgröße ein Überfahren der virtuellen Grenze erlaubt oder verhindert. Als Karte kann ein Raumplan des zu bearbeitenden Bereichs eingesetzt werden, also eine Umgebungs- oder Grundrisskarte. Vor dem Einsatz der Robotereinheit wird die virtuelle Grenze, die beispielsweise die Position einer Balkon- oder Terrassentür darstellen kann, in die Bewegungssteuerung eingegeben. Als virtuelle Grenze kann auch die Linie gespeichert werden, die sich aufgrund einer Abdachung eines Balkons oder einer Terrasse zwischen einem Bereich, der nicht von einem Regenereignis nass wird, und einem Bereich, der von einem Regenereignis nass wird, ergibt

Das zuvor beschriebene System ermöglicht es beispielsweise, einen mobilen Saugroboter auch in einem Außenbereich einzusetzen, da durch das erfindungsgemäße Erfassen von mindestens einer Umweltgröße und durch das Beeinflussen der Funktionsweise des mobilen Saugroboters aktiv verhindert werden kann, dass dieser einen Boden bearbeitet, der für die Aufnahme von Staub zu feucht ist oder der durch das Vorhandensein von Wasserpfützen sogar eine Beschädigung des Saugroboters verursachen könnte. Denn Saugroboter sind nicht dazu geeignet, Wasser aufzusaugen.

Das zuvor beschriebene System ermöglicht es weiterhin, einen mobilen Rasenmähroboter beispielsweise so zu steuern, dass abhängig von einer längerfristigen Wetterlage die Häufigkeit des Rasenmähens gesteuert werden kann. Denn bei längerfristig feuchtem oder nassem Wetter ist ein häufigeres Rasenmähen erforderlich, während bei einer längerfristig trockenen Wetterlage der Rasen nicht so häufig gemäht zu werden braucht. Dazu kann in bevorzugter Weise von einem Benutzer voreingestellt werden, wie oft der Rasen bei vorgegebenen Wetterlagen gemäht werden soll.

Das oben aufgezeigte technische Problem wird auch durch ein Verfahren zum Steuern einer mobilen Robotereinheit zur Bearbeitung eines Bodens zumindest teilweise in einem Außenbereich, insbesondere Entfernen von Verschmutzungen oder Rasenmähen, gelöst, bei dem mindestens eine Umweltgröße erfasst und ausgewertet wird, bei dem die Funktionsweise der mobilen Robotereinheit in Abhängigkeit von dem Wert einer der mindestens einen erfassten Umweltgröße beeinflusst wird und bei dem die mindestens eine Umweltgröße über einen Teil einer Hauswetterstation erfasst wird.

Des Weiteren kann in Abhängigkeit von dem Wert der mindestens einen erfassten Umweltgröße ein Überfahren einer virtuellen Grenze zwischen einem überdachten Raumbereich und einem nicht überdachten Raumbereich durch die Robotereinheit erlaubt oder verhindert werden.

Das oben aufgezeigte technische Problem wird weiter durch ein Verfahren zum Steuern einer mobilen Robotereinheit zur Bearbeitung eines Bodens zumindest teilweise in einem Außenbereich, insbesondere Entfernen von Verschmutzungen oder Rasenmähen, gelöst, bei dem mindestens eine Umweltgröße erfasst und ausgewertet wird, bei dem die Funktionsweise der mobilen Robotereinheit in Abhängigkeit von dem Wert einer der mindestens einen erfassten Umweltgröße beeinflusst wird und bei dem in Abhängigkeit von dem Wert der mindestens einen erfassten Umweltgröße ein Überfahren einer virtuellen Grenze zwischen einem überdachten Raumbereich und einem nicht überdachten Raumbereich durch die Robotereinheit erlaubt oder verhindert wird.

Die mit diesen Verfahren zu erreichenden Vorteile entsprechen denen, die im Zusammenhang mit dem erfindungsgemäßen System bereits zuvor erläutert worden sind.

Eine bevorzugte Ausgestaltung des Verfahrens besteht darin, dass das Ausfahren der Robotereinheit aus einem überdachten Bereich einer Basisstation zu Beginn einer Bearbeitung des Bodens verhindert wird.

Weiterhin kann das Verfahren beinhalten, dass ein Bearbeitungsvorgang abgebrochen wird und dass die Robotereinheit zur Rückkehr in einen überdachten Bereich einer Basisstation veranlasst wird.

Im Folgenden wird die Erfindung anhand von Ausführungsbeispielen mit Bezug auf die Zeichnung erläutert. In der Zeichnung zeigen
- Fig. 1: ein erstes Ausführungsbeispiel eines erfindungsgemäßen Systems,
- Fig. 2: ein zweites Ausführungsbeispiel eines erfindungsgemäßen Systems und
- Fig. 3: ein drittes Ausführungsbeispiel eines erfindungsgemäßen Systems.

In der nachfolgenden Beschreibung der verschiedenen erfindungsgemäßen Ausführungsbeispiele werden gleiche Bauteile mit gleichen Bezugszeichen versehen, auch wenn die Bauteile bei den verschiedenen Ausführungsbeispielen in ihrer Dimension oder Form Unterschiede aufweisen können.

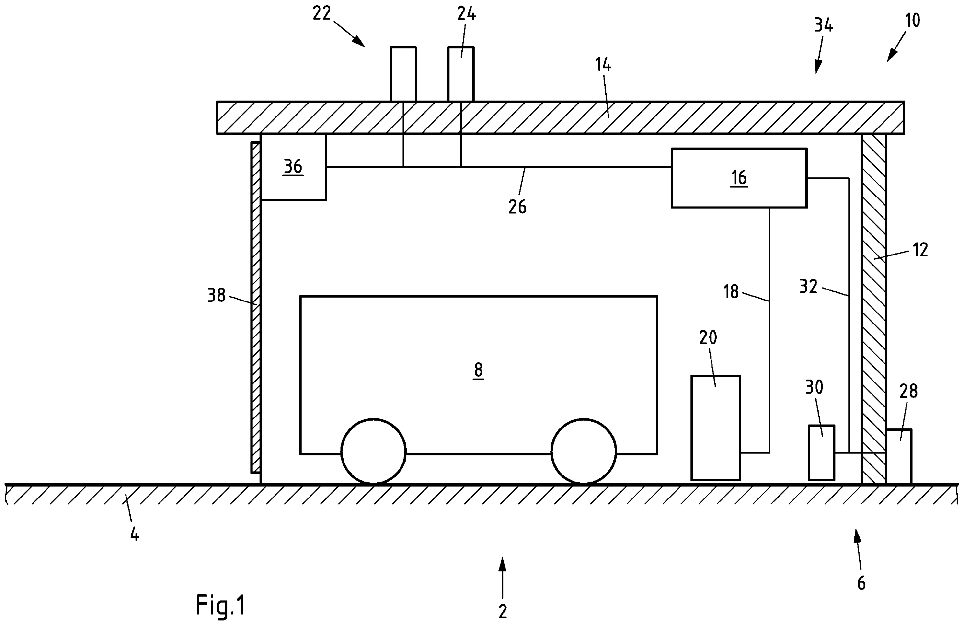

Fig. 1 zeigt ein erstes Ausführungsbeispiel eines erfindungsgemäßen Systems 2 zur Bearbeitung eines Bodens 4 zumindest teilweise in einem Außenbereich, wobei vorliegend die Bearbeitung darin besteht, dass Verschmutzungen vom Boden 4 entfernt werden sollen. Der Boden 4 kann dabei Teil eines Balkons oder einer Terrasse eines Gartens sein.

Das System weist eine Basisstation 6 und eine mobile Robotereinheit 8 auf, die vorliegend als Saugroboter ausgebildet ist und lediglich schematisch in Fig. 1 dargestellt ist.

Die Basisstation 6 weist eine Garage 10 mit einer Rückwand 12 und einem Dach 14 auf. Das Dach 14 schützt den Saugroboter 8 insbesondere dann, wenn die Basisstation 6 im Freien angeordnet ist und Umwelteinflüssen ausgesetzt ist. Die Garage 10 kann auch noch nicht dargestellte Seitenwände aufweisen, die den Saugroboter 8 seitlich schützen.

Die Basisstation 6 weist eine Garagenelektronik 16 auf, die zum einen mit einer elektrischen Versorgung verbunden ist. Die elektrische Versorgung kann ein Netzanschluss, ein Akkumulator oder ein Photovoltaik-Element sein. Die Garagenelektronik 16 ist zum anderen über eine Leitung 18 mit einer Ladestation 20 verbunden und versorgt die Ladestation 20 mit elektrischer Energie. Zudem kann auch eine Daten-Kommunikation zwischen dem Saugroboter 8 und der Garagenelektronik 16 über die Leitung 18 erfolgen.

Der Saugroboter 8 ist ein an sich bekannter selbst fahrender und selbst navigierender durch mindestens einen Akkumulator betriebener Roboter, der ein Gebläse zum Erzeugen eines Saugluftstroms, eine Staubkammer zur Aufnahme von Staub und anderen Partikeln, einen Saugmund zum Einsaugen von Staub und anderen Partikeln, mindestens drei Räder, von denen mindestens zwei motorisch angetrieben sind sowie eine Steuerung zur Durchführung eines Saugvorganges aufweist.

Erfindungsgemäß ist mindestens eines der nachfolgend beschriebenen Erfassungsmittel zum Erfassen von mindestens einer Umweltgröße in bzw. an der Basisstation 6 vorgesehen. Auf dem Dach 14 der Basisstation 6 ist eine Sensoreinheit 22 angeordnet, die mindestens ein Erfassungsmittel 24 in Form eines der Sensortypen Temperatursensor, Niederschlagssensor, Niederschlagsmengensensor, Luftfeuchtigkeitssensor, Bodenfeuchtigkeitssensor, Windstärkesensor oder Luftdrucksensor aufweist. Bevorzugt ist eine Kombination mehrerer oder aller der genannten Sensortypen. Die Sensoreinheit 22 ist über die Leitung 26 mit der Garagenelektronik 16 verbunden und kann Messsignale des mindestens einen Erfassungsmittels 24 an die Garagenelektronik 16 übermitteln. Die Erfassungsmittel 24 können auch auf zwei oder mehr Sensoreinheiten 22 verteilt angeordnet sein.

An der Rückwand 12 ist außen seitig ein weiteres Erfassungsmittel in Form eines Sensor 28 angeordnet, der die Feuchtigkeit des Bodens oberflächlich und/oder im Untergrund misst. Innerhalb der Garage 10 ist weiterhin ein Erfassungsmittel in Form eines Sensors 30 zur Bestimmung von Feuchtigkeit innerhalb der Garage 10 zur Verwirklichung einer Schutzfunktion vorgesehen. Beide Sensoren 28 und 30 sind über eine Leitung 32 mit der Garagenelektronik 16 verbunden.

Für die Verwirklichung der vorliegenden Erfindung ist lediglich das Vorhandensein eines der Erfassungsmittel 24, 28 oder 30 erforderlich, wobei es jedoch bevorzugt ist, mehrere dieser Erfassungsmittel vorzusehen, um unterschiedliche Umweltgrößen zu erfassen und daraus die Umweltbedingungen im Bereich des zu bearbeitenden Bodens bestimmen zu können.

Des Weiteren ist in der Garagenelektronik 16 eine Steuerung 34 vorgesehen, die die Funktionsweise des mobilen Saugroboters 8 in Abhängigkeit von dem Wert mindestens einer von dem mindestens einen Erfassungsmittel 24, 28 oder 30 erfassten Umweltgröße beeinflusst. Dazu kann beispielsweise ein Niederschlagssensor 24 der Sensoreinheit 22 über die Leitung 26 der Steuerung 34 signalisieren, dass aktuell Regen fällt. Aus diesem Messsignal kann die Steuerung 34 ableiten, dass eine Bearbeitung des Bodens 4 durch den Saugroboter 8 unterbunden werden soll. Dazu erzeugt die Steuerung 34 ein Steuersignal, das über die Leitung 26 an einen elektromechanischen Aktor 36 übermittelt wird, so dass der Aktor 36 ein Garagentor 38 als Blockademittel schließt. Der elektromechanische Aktor 36 kann als Motor-Getriebe-Einheit, als Seilzugmechanismus oder pneumatisch ausgebildet sein. Das Garagentor 38 kann als Rolltor oder als Schranke oder Pfosten realisiert sein.

Jedenfalls verhindert das Garagentor 38 im geschlossenen Zustand, dass der mobile Saugroboter 8 aus der Basisstation 6 heraus fährt, wenn beispielsweise eine Zeitsteuerung einen neuen Bearbeitungszyklus startet. Der Saugroboter 8 findet dann keinen Weg aus der Garage 10 heraus und bricht den Bearbeitungszyklus wieder ab. Zuvor ist der Vorgang anhand eines Feuchtigkeitssensors 24 beschrieben worden. Ebenso oder zusätzlich kann auch ein Windsensor 24 eingesetzt werden, um zu beurteilen, ob ein zu starker Wind im Bereich des zu bearbeitenden Bodens 4 herrscht. Denn bei zu starkem Wind macht ein Saugen des Bodens 4 wenig Sinn, da bereits gereinigte Teile des Bodens 4 immer wieder mit Staub und Partikeln bedeckt werden. Des Weiteren kann ein Temperatursensor 24 verwendet werden, um festzustellen, die Außentemperatur zu hoch oder zu niedrig ist, um den Saugroboter 8 einzusetzen.

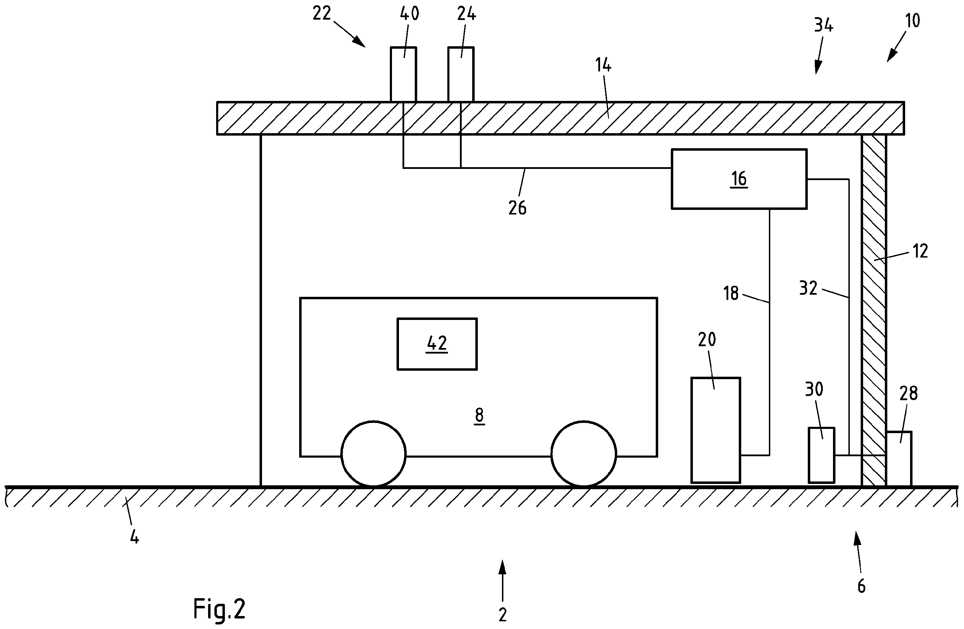

Fig. 2 zeigt ein zweites Ausführungsbeispiel eines erfindungsgemäßen Systems 2. Im Unterschied zu Fig. 1 weisen die Garage 10 einen Garagen-Transceiver 40, der über die Leitung 26 mit der Garagenelektronik 16 verbunden ist, und der Saugroboter einen Roboter-Transceiver 42 für eine drahtlose Kommunikation zwischen der Steuerung 34 und dem Saugroboter 8 auf.

Stellt die Steuerung 34 auf der Basis mindestens einer Umweltgröße, die von dem mindestens einen Erfassungsmittel 24, 28 oder 30 an die Steuerung 34 übermittelt worden ist, eine Umweltsituation fest, die für einen Einsatz des Saugroboters 8 nicht geeignet ist, so wird von der Steuerung 34 ein Steuersignal über die Transceiver 40 und 42 an den Saugroboter 8 übertragen, so dass der Saugroboter 8 innerhalb der Garage 10 verbleibt, auch wenn eine Zeitsteuerung des Saugroboters 8 eigentlich einen neuen Bearbeitungzyklus beginnen würde.

Das in Fig. 2 dargestellte erfindungsgemäße System 2 ist auch dafür geeignet, dass dann, wenn sich der Saugroboter 8 innerhalb eines Bearbeitungszyklus befindet, also beispielsweise bereits einen Teil des Bodens 4 bearbeitet hat, und wenn sich die Umweltbedingungen verändern, beispielsweise durch ein Regenereignis, die Steuerung 34 dem Saugroboter 8 ein Signal überträgt, das zum Abbruch des Bearbeitungszyklus führt und den Saugroboter 8 veranlasst, wieder in die Basisstation zurückzukehren. Somit ist die Steuerung 34 dafür eingerichtet, ein Beendigungssignal zu erzeugen und mittels Kommunikationsmitteln 40, 42 an den Saugroboter 8 zu übertragen. Der Saugroboter 8 kann mittels einer integrierten (nicht dargestellten) Bewegungssteuerung nach Empfang des Beendigungssignals die Bearbeitung des Bodens 4 beenden und dann wieder zur Basisstation 6 und in die Garage 10 zurückfahren.

Die beiden in den Fig. 1 und 2 dargestellten Ausführungsbeispiele von erfindungsgemäßen Systemen 2 können auch dadurch modifiziert oder ergänzt werden, dass ein Erfassungsmittel 24 als eine Kommunikationsschnittstelle zu einem Netzwerk, beispielsweise zum Internet oder zu einem Hausnetzwerk ausgebildet ist und dass die Erfassungsmittel 24 geeignet sind, Wetterdaten als die mindestens eine Umweltgröße herunterzuladen.

Die Kommunikationsschnittstelle kann dabei drahtgebunden oder drahtlos ausgebildet sein, also beispielsweise als LAN, WLAN oder als mobile Datenverbindung. Die Wetterdaten können vergangene Wetterdaten, aktuelle Wetterdaten und/oder Wetterprognosen beinhalten. Somit kann die von Umweltgrößen abhängige Steuerung der mobilen Robotereinheit, vorliegend ausgebildet als Saugroboter 8, auch allein durch aus dem Internet heruntergeladene Daten erfolgen. Ein Messen von Umweltgrößen im direkten Umfeld der Basisstation 6 und des Saugroboters 8 ist dann nicht mehr erforderlich oder kann ergänzend eingesetzt werden.

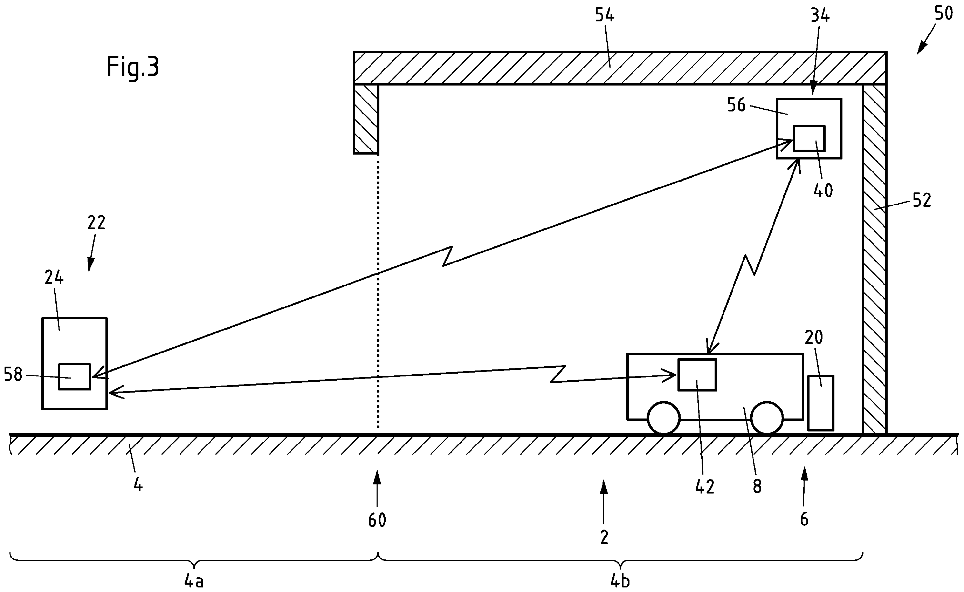

Fig. 3 zeigt ein drittes Ausführungsbeispiel eines erfindungsgemäßen Systems 2 ebenfalls zur Bearbeitung eines Bodens 4 zumindest teilweise in einem Außenbereich 4a und in einem Innenbereich 4b. Auch hierbei besteht die Bearbeitung darin, dass Verschmutzungen vom Boden 4 entfernt werden sollen. Das System weist eine Basisstation 6 und eine mobile Robotereinheit 8 auf, die vorliegend als Saugroboter ausgebildet ist.

Die Basisstation 6 ist in einem Raum 50 mit Wänden 52 und einer Decke 54 angeordnet. Im Raum 50 ist eine Elektronik 56 angeordnet, die mit einer elektrischen Versorgung verbunden ist. Eine Ladestation 20 ist ebenfalls im Raum 50 angeordnet und stellt vorliegend die Basisstation 6 dar, da innerhalb des Raums 50 kein weiterer Schutz gegen äußere Einflüsse durch eine Garage notwendig ist.

Die oben bereits beschriebene Steuerung 34 ist innerhalb der Elektronik 56 im Raum 50, also im Umfeld der Basisstation 6 angeordnet. Mittels der zuvor beschriebenen Aufladestation 20 kann der Saugroboter 8 aufgeladen werden. Die Aufladestation 20 wird mittels nicht dargestellter Leitung mit elektrischer Energie versorgt. Eine Verbindung zur Elektronik 56, wie bei den Ausführungsbeispielen nach den Fig. 1 und 2 ist nicht erforderlich.

Des Weiteren ist eine Sensoreinheit 22 mit mindestens einem Sensormittel 24, wie sie grundsätzlich schon für die anderen Ausführungsbeispiele erläutert worden ist, im Außenbereich 4a angeordnet und kann somit Wetterdaten als Umweltgrößen erfassen. Mittels einer drahtlosen Kommunikation zwischen einem Kommunikationsmittel 58 in der Sensoreinheit 22 und einem Kommunikationsmittel 40 in der Steuerung 34 stehen die Sensoreinheit 22 und die Steuerung 34 in Verbindung und können Daten miteinander austauschen.

Wie Fig. 3 weiterhin zeigt, ist der Saugroboter 8 mit einem Kommunikationsmittel 42 ausgestattet, mit der ebenfalls über eine drahtlose Funkverbindung Daten zwischen dem Saugroboter 8 und der Steuerung 34 ausgetauscht werden. Ebenso ist eine drathlose Kommunikation zwischen dem Saugroboter 8 und der Sensoreinheit 22 über die Kommunikationsmittel 42 und 58 möglich. Somit können die Daten zu der mindestens einen durch die Sensormittel 24 ermittelten Umweltgröße sowohl zwischen der Sensoreinheit 22 und der Steuerung 34 als auch oder alternativ zwischen der Sensoreinheit 22 und dem Saugroboter 8 ausgetauscht werden.

Findet beispielsweise die Kommunikation direkt zwischen der Sensoreinheit 22 und dem Saugroboter 8 statt, so kann die separate Steuerung 34 entfallen und die Steuerung im Saugroboter 8 oder in der Sensoreinheit 22 integriert sein. Ebenso kann die Kommunikation zur Übertragung der Daten der mindestens einen Umweltgröße auch nur zwischen der Sensoreinheit 22 und der separaten Steuerung 34 erfolgen, während die Steuerung 34 dann mittels der drahtlosen Verbindung mit dem Saugroboter 8 die Steuerung des Saugroboters 8 beeinflusst.

Die Steuerung des Saugroboters 8 kann dann anhand der mindestens einen Umweltgröße derart erfolgen, dass der Saugroboter 8 nur innerhalb des Innenbereichs 4b erfolgt, wenn beispielsweise die Sensoreinheit 22 ein Regenereignis feststellt und eine Saugbearbeitung des Bodens im Außenbereich 4a nicht möglich ist bzw. zu Schäden am Saugroboter 8 führen könnte.

Dazu ist es bevorzugt, dass eine im Saugroboter 8 integrierte Bewegungssteuerung eine abgespeicherte Karte aufweist, dass die Karte eine virtuelle Grenze 60 (gepunktete Linie) zwischen dem überdachten Raumbereich, also dem Innenbereich 4b, und dem nicht überwachten Bereich, also dem Außenbereich 4a, aufweist und dass die Bewegungssteuerung in Abhängigkeit von dem Wert der mindestens einen von dem mindestens einen Erfassungsmittel 24 erfassten Umweltgröße ein Überfahren der virtuellen Grenze 60 erlaubt oder verhindert.

Die Karte definiert also eine Umgebungs- oder Grundrisskarte und abhängig von der mindestens einen Umweltgröße wird ein Raumplan erzeugt, also ein Bereich des Bodens, der bearbeitet werden soll. Stellt der Wert der mindestens einen Umweltgröße keinen Hinderungsgrund dar, um durch den Saugroboter 8 auch den Außenbereich 4a saugen zu lassen, so wird der Raumplan anhand der Karte so bestimmt, dass sowohl der Innenbereich 4b als auch der Außenbereich 4a gereinigt wird.

Stellt dagegen der Wert der mindestens einen Umweltgröße einen Hinderungsgrund dar und soll daher der Saugroboter 8 nur den Innenbereich 4b reinigen, so wird der Raumplan anhand der Karte so bestimmt, dass nur der Innenbereich 4b und nicht der Außenbereich 4a gereinigt wird. Somit wird der Innenbereich 4b nur bis zur virtuellen Grenze 60 gereinigt.

Fig. 3 zeigt die Position der virtuellen Grenze zwischen dem Außenbereich 4a und dem Innenbereich 4b. Ebenso ist es möglich, die virtuelle Grenze zwischen einem überdachten Teil des Außenbereichs 4a und einem nicht überdachten Teil des Außenbereichs 4a zu ziehen. Somit kann auch bei einem Regenereignis der überdachte Teil des Außenbereichs, der in ausreichendem Maße trocken bleibt, zusammen mit dem Innenbereich 4b gereinigt werden.

Die zuvor erläuterten Ausführungsbeispiele weisen Saugroboter 6 als Robotereinheiten auf. Die Robotereinheit kann aber auch als Kehrroboter zum Reinigen des Untergrunds ausgebildet sein. Ebenso kann die Robotereinheit als Rasenmähroboter ausgebildet sein und entsprechende Steuermittel aufweisen, wie sie für die Saugroboter beschrieben worden sind.

## Patentansprüche

1. System zur Bearbeitung eines Bodens zumindest teilweise in einem Außenbereich, insbesondere Entfernen von Verschmutzungen oder Rasenmähen,
- mit einer Basisstation (6) und
- mit einer mobilen Robotereinheit (8),
- wobei mindestens ein Erfassungsmittel (24) zum Erfassen von mindestens einer Umweltgröße vorgesehen ist und
- wobei eine Steuerung (34) vorgesehen ist, die die Funktionsweise der mobilen Robotereinheit (8) in Abhängigkeit von dem Wert mindestens einer von dem mindestens einen Erfassungsmittel (24) erfassten Umweltgröße beeinflusst, **dadurch gekennzeichnet,**
- **dass** die Erfassungsmittel (24) als Teil einer Hauswetterstation ausgebildet sind.

2. System nach Anspruch 1,
**dadurch gekennzeichnet,**
**dass** die Umweltgröße ausgewählt ist aus der Liste: Temperatur, Niederschlag, Niederschlagsmenge, Luftfeuchtigkeit, Bodenfeuchtigkeit, Windstärke, Luftdruck.

3. System nach Anspruch 1 oder 2,
**dadurch gekennzeichnet,**
**dass** die Erfassungsmittel (24) als Sensor für die mindestens eine Umweltgröße ausgebildet sind.

4. System nach Anspruch 1 oder 2,
**dadurch gekennzeichnet,**
- **dass** die Erfassungsmittel (24) eine Kommunikationsschnittstelle aufweisen und
- **dass** die Erfassungsmittel (24) geeignet sind, Wetterdaten als die mindestens eine Umweltgröße über die Kommunikationsschnittstelle herunterzuladen.

5. System nach einem der Ansprüche 1 bis 4,
**dadurch gekennzeichnet,**
**dass** die Steuerung (34) an der Basisstation (6), an der Robotereinheit (8), an dem zumindest einen Erfassungsmittel (24) oder im Umfeld der Basisstation (6) angeordnet ist.

6. System nach einem der Ansprüche 1 bis 5,
**dadurch gekennzeichnet,**
**dass** ein Teil eines Hausnetzwerks die Steuerung (34) bildet.

7. System nach einem der Ansprüche 1 bis 6,
**dadurch gekennzeichnet,**
**dass** die Steuerung (34) dafür eingerichtet ist, ein Blockademittel, insbesondere eine Ausfahrtssperre eines an der Basisstation (6) ausgebildeten überdachten Bereichs zu steuern.

8. System nach einem der Ansprüche 1 bis 7,
**dadurch gekennzeichnet,**
- **dass** die Steuerung (34) dafür eingerichtet ist, ein Beendigungssignal zu erzeugen und mittels Kommunikationsmitteln an die Robotereinheit (8) zu übertragen und
- **dass** die Robotereinheit (8) eine Bewegungssteuerung aufweist, die eingerichtet ist, nach Empfang des Beendigungssignals die Bearbeitung des Bodens zu beenden und insbesondere in die Basisstation (6) zurückzufahren.

9. System nach Anspruch 8,
**dadurch gekennzeichnet,**
- **dass** die Bewegungssteuerung der Robotereinheit (8) eine abgespeicherte Karte aufweist,
- **dass** die Karte eine virtuelle Grenze zwischen dem überdachten Raumbereich und dem nicht überdachten Bereich aufweist und
- **dass** die Bewegungssteuerung in Abhängigkeit von dem Wert der mindestens einen von dem mindestens einen Erfassungsmittel (24) erfassten Umweltgröße ein Überfahren der virtuellen Grenze erlaubt oder verhindert.

10. Verfahren zum Steuern einer mobilen Robotereinheit zur Bearbeitung eines Bodens zumindest teilweise in einem Außenbereich, insbesondere Entfernen von Verschmutzungen oder Rasenmähen,
- bei dem mindestens eine Umweltgröße erfasst und ausgewertet wird,
- bei dem die Funktionsweise der mobilen Robotereinheit in Abhängigkeit von dem Wert einer der mindestens einen erfassten Umweltgröße beeinflusst wird und **gekennzeichnet durch** einen Verfahrensschritt
- bei dem die mindestens eine Umweltgröße über einen Teil einer Hauswetterstation erfasst wird.

11. Verfahren nach Anspruch 10,
- bei dem in Abhängigkeit von dem Wert der mindestens einen erfassten Umweltgröße ein Überfahren einer virtuellen Grenze zwischen einem überdachten Raumbereich und einem nicht überdachten Raumbereich durch die Robotereinheit erlaubt oder verhindert wird.

12. Verfahren zum Steuern einer mobilen Robotereinheit zur Bearbeitung eines Bodens zumindest teilweise in einem Außenbereich, insbesondere Entfernen von Verschmutzungen oder Rasenmähen,
- bei dem mindestens eine Umweltgröße erfasst und ausgewertet wird,
- bei dem die Funktionsweise der mobilen Robotereinheit in Abhängigkeit von dem Wert einer der mindestens einen erfassten Umweltgröße beeinflusst wird und **gekennzeichnet durch** einen Verfahrensschritt
- bei dem in Abhängigkeit von dem Wert der mindestens einen erfassten Umweltgröße ein Überfahren einer virtuellen Grenze zwischen einem überdachten Raumbereich und einem nicht überdachten Raumbereich durch die Robotereinheit erlaubt oder verhindert wird.

13. Verfahren nach einem der Ansprüche 10 bis 12,
bei dem das Ausfahren der Robotereinheit aus einem überdachten Bereich einer Basisstation zu Beginn einer Bearbeitung des Bodens verhindert wird.

14. Verfahren nach einem der Ansprüche 10 bis 13,
- bei dem ein Bearbeitungsvorgang abgebrochen wird und
- bei dem die Robotereinheit zur Rückkehr in einen überdachten Bereich einer Basisstation veranlasst wird.

## Claims

1. A system for processing ground at least partially in an outdoor area, in particular for removing contamination or cutting grass,
- having a base station (6) and
- having a mobile robot unit (8),
- wherein at least one detection means (24) for detecting at least one environmental variable is provided and
- wherein a control (34) is provided, which influences the operating mode of the mobile robot unit (8) according to the value of at least one environmental variable detected by the at least one detection means (24),
**characterised in that**
- the detection means are formed as part of a home weather station.

2. System according to Claim 1,
**characterised in that**
the environmental variable is selected from the list: temperature, precipitation, amount of precipitation, humidity, ground moisture, wind strength, air pressure.

3. System according to Claim 1 or 2,
**characterised in that**
the detection means (24) are formed as a sensor for the at least one environmental variable.

4. System according to Claim 1 or 2,
**characterised in that**
- the detection means (24) have a communication interface and
- **in that** the detection means (24) are suitable for downloading weather data as the at least one environmental variable via the communication interface.

5. System according to any one of Claims 1 to 4,
**characterised in that**
the control (34) is arranged on the base station (6), on the robot unit (8), on the at least one detection means (24) or in the vicinity of the base station (6).

6. System according to any one of Claims 1 to 5,
**characterised in that**
part of a home network forms the control (34).

7. System according to any one of Claims 1 to 6,
**characterised in that**
the control (34) is designed to control a blocking means, in particular an exit barrier of a covered area arranged at the base station (6).

8. System according to any one of Claims 1 to 7,
**characterised in that**
- the control (34) is designed to generate a terminating signal and to transmit this to the robot unit (8) via communication means and
- **in that** the robot unit (8) has a movement control which is designed to terminate the processing of the ground after receiving the terminating signal and in particular to return to the base station (6).

9. System according to Claim 8,
**characterised in that**
- the movement control of the robot unit (8) has a stored map,
- **in that** the map contains a virtual boundary between the covered spatial area and the non-covered spatial area, and
- **in that** the movement control enables or prevents crossing of the virtual boundary according to the value of the at least one environmental variable detected by the at least one detection means (24).

10. A method for controlling a mobile robot unit for processing ground at least partially in an outdoor area, in particular for removing contamination or cutting grass,
- in which at least one environmental variable is detected and evaluated,
- in which the operating mode of the mobile robot unit is influenced according to the value of one of the at least one detected environmental variables and **characterized by** a method step
- in which the at least one environmental variable is detected by a part of a home weather station.

11. The method according to Claim 10,
in which crossing of a virtual boundary between a covered spatial area and a non-covered spatial area by the robot unit is enabled or prevented according to the value of the at least one detected environmental variable.

12. A method for controlling a mobile robot unit for processing ground at least partially in an outdoor area, in particular for removing contamination or cutting grass,
- in which at least one environmental variable is detected and evaluated;
- in which the operating mode of the mobile robot unit is influenced according to the value of one of the at least one detected environmental variable and **characterized by** a method step
- in which crossing of a virtual boundary between a covered spatial area and a non-covered spatial area by the robot unit is enabled or prevented according to the value of the at least one detected environmental variable.

13. The method according to any one of the Claims 10 to 12,
in which the robot unit is prevented from exiting a covered area of a base station at the start of a processing of the ground.

14. The method according to any one of the Claims 10 to 13,
- in which a processing procedure is aborted and
- in which the robot unit is prompted to return to a covered area of a base station.

## Revendications

1. Système pour traiter un sol au moins partiellement dans une zone extérieure, en particulier pour enlever des saletés ou pour tondre le gazon,
- avec une station de base (6) et
- avec une unité de robot mobile (8),
- où au moins un moyen de détection (24) est prévu pour détecter au moins une variable environnementale, et
- où une unité de commande (34) est prévue, laquelle influence le fonctionnement de l'unité de robot mobile (8) en fonction de la valeur d'au moins une variable environnementale détectée par l'au moins un moyen de détection (24),
**caractérisé**
- **en ce que** les moyens de détection (24) sont conçus comme faisant partie d'une station météorologique domestique.

2. Système selon la revendication 1,
**caractérisé**
**en ce que** la variable environnementale est sélectionnée parmi les éléments de la liste: Température, précipitations, quantité de précipitations, humidité de l'air, humidité du sol, force du vent, pression atmosphérique.

3. Système selon la revendication 1 ou 2,
**caractérisé**
**en ce que** les moyens de détection (24) sont conçus comme un capteur pour l'au moins une variable environnementale.

4. Système selon la revendication 1 ou 2,
**caractérisé**
- **en ce que** les moyens de détection (24) ont une interface de communication, et
- **en ce que** les moyens de détection (24) sont adaptés pour télécharger des données météorologiques en tant que l'au moins une variable environnementale via l'interface de communication.

5. Système selon l'une des revendications 1 à 4,
**caractérisé**
**en ce que** l'unité de commande (34) est disposée au niveau de la station de base (6), de l'unité de robot (8), de l'au moins un moyen de détection (24) ou dans l'environnement de la station de base (6).

6. Système selon l'une des revendications 1 à 5,
**caractérisé**
**en ce qu'**une partie d'un réseau domestique constitue l'unité de commande (34).

7. Système selon l'une des revendications 1 à 6,
**caractérisé**
**en ce que** l'unité de commande (34) est configurée pour commander un moyen de blocage, en particulier un blocage de sortie d'une zone couverte formée au niveau de la station de base (6).

8. Système selon l'une des revendications 1 à 7,
**caractérisé**
- **en ce que** l'unité de commande (34) est configurée pour générer un signal de terminaison et pour le transmettre à l'unité de robot (8) au moyen de moyens de communication, et
- **en ce que** l'unité de robot (8) a une unité de commande de mouvement qui est configurée pour, après réception du signal de terminaison, terminer le traitement du sol et, en particulier, pour revenir à la station de base (6).

9. Système selon la revendication 8,
**caractérisé**
- **en ce que** l'unité de commande de mouvement de l'unité de robot (8) comprend une carte mémorisée,
- **en ce que** la carte présente une frontière virtuelle entre la zone d'espace couverte et la zone non couverte, et
- **en ce que** l'unité de commande de mouvement permet ou empêche le franchissement de la frontière virtuelle en fonction de la valeur de l'au moins une variable environnementale détectée par l'au moins un moyen de détection (24).

10. Procédé de commande d'une unité de robot mobile pour traiter un sol au moins partiellement dans une zone extérieure, en particulier pour enlever des saletés ou pour tondre le gazon,
- dans lequel au moins une variable environnementale est détectée et évaluée,
- dans lequel le fonctionnement de l'unité de robot mobile est influencé en fonction
de la valeur de l'une des au moins une variable environnementale détectée, et
**caractérisé par** une étape de procédé
- dans laquelle l'au moins une variable environnementale est détectée via une partie d'une station météorologique domestique.

11. Procédé selon la revendication 10,
- dans lequel, en fonction de la valeur de l'au moins une variable environnementale détectée, un franchissement d'une frontière virtuelle entre une zone d'espace couverte et une zone d'espace non couverte par l'unité de robot est autorisé ou empêché.

12. Procédé de commande d'une unité de robot mobile pour traiter un sol au moins partiellement dans une zone extérieure, en particulier pour enlever des saletés ou tondre le gazon,
- dans lequel au moins une variable environnementale est détectée et évaluée,
- dans lequel le mode de fonctionnement de l'unité de robot mobile est influencé en fonction de la valeur de l'une des au moins une variable environnementale détectée, et
**caractérisé par** une étape de procédé
- dans laquelle, en fonction de la valeur de l'au moins une variable environnementale détectée, un franchissement d'une frontière virtuelle entre une zone d'espace couverte et une zone d'espace non couverte par l'unité de robot est autorisé ou empêché.

13. Procédé selon l'une quelconque des revendications 10 à 12,
dans lequel l'unité de robot est empêchée de se déplacer hors d'une zone couverte d'une station de base au début d'un traitement du sol.

14. Procédé selon l'une quelconque des revendications 10 à 13,
- dans lequel une opération de traitement est interrompue, et
- dans lequel l'unité de robot est amenée à retourner dans une zone couverte d'une station de base.
